# EUROPEAN PATENT APPLICATION

(11) **EP 4 693 837 A1**
(43) Date of publication of application: **11.02.2026**
(21) Application number: 24791763.6
(22) Date of filing: 07.03.2024
(51) Int. Cl.: H02K 3/50, H02K 3/28

(54) **STATOR ASSEMBLY, MOTOR AND WASHING EQUIPMENT**

(30) Priority: 21.04.2023 CN 202310437108
(71) Applicant: Huai'An Welling Motor Manufacturing Co., Ltd., Huai'an, Jiangsu 223005 (CN)
(72) Inventor: ZHAO, Yunsheng, Huaian, Jiangsu 223005 (CN); GUO, Bingchun, Huaian, Jiangsu 223005 (CN); SHI, Zhifeng, Huaian, Jiangsu 223005 (CN)
(74) Representative: RGTH
(86) International application number: PCT/CN2024/080549
(87) International publication number: WO 2024/217175

(57) **Abstract**

A stator assembly, a motor and a washing appliance are disclosed. The stator assembly (1000) includes: an insulating frame (100); a winding (110), wound around the insulating frame (100) and comprising a plurality of lead wires (111); a terminal block (120), on which a plurality of mounting positions (121) are arranged at intervals; a socket (130), connected to the terminal block (120) and covering the plurality of mounting positions (121); and a first terminal (200) and a second terminal (300), respectively mounted at corresponding one of the plurality of mounting positions (121), wherein the first terminal (200) and the second terminal (300) are respectively connected to the corresponding one of the plurality of lead wires (111), the first terminal (200) comprises a first wire bonding portion (210) and a first tab (220) extending out of the socket (130), and a first stud (211) and a second stud (212) are spaced apart from each other on one side of the first wire bonding portion (210). One of the plurality of lead wires (111) is between the first stud (211) and the second stud (212), and the first stud (211) and/or the second stud (212) are/is configured to be bent toward the one of the plurality of lead wires (111) to limit a position of the one of the plurality of lead wires (111).

## Description

### CROSS-REFERENCE TO RELATED APPLICATION

This application is filed on the basis of Chinese patent application No. 202310437108.6 filed April 21, 2023, entitled "STATOR ASSEMBLY, MOTOR AND WASHING APPLICNACE", and claims priority to the Chinese patent application, the entire contents of which are incorporated herein by reference.

### TECHNICAL FIELD

The present disclosure relates to the field of motors, and in particular to a stator assembly, a motor, and a washing appliance.

### BACKGROUND

A lead wire of a motor is connected to a terminal, and the terminal is in turn connected to a power cord through an adapter cable. In the related art, the lead wire is connected to the terminal by soldering. The lead wire needs to be fixed to the terminal before soldering, in order to prevent the lead wire from dangling. The fixing of the lead wire before soldering may be achieved by engaging the lead wire in a slot. However, for the above scheme, due to problems such as manufacturing tolerances, the lead wire is prone to becoming too loose or too tight and unable to fit into the slots, i.e., the lead wire is likely to warp up, making it difficult to fit with the terminal, resulting in unsatisfactory soldering effect.

### SUMMARY

The present disclosure aims to at least partially resolve the technical problems in the related technology. Therefore, the present disclosure provides a stator assembly, a motor comprising the stator assembly, and a washing appliance comprising the motor.

An embodiment of the present disclosure provides a stator assembly, comprising:
- an insulating frame;
- a winding, wound around the insulating frame and comprising a plurality of lead wires;
- a terminal block, wherein a plurality of mounting positions are arranged at an interval on the terminal block;
- a socket, connected to the terminal block and covering the plurality of mounting positions;
- a first terminal and a second terminal, respectively mounted at corresponding one of plurality of mounting positions, where the first terminal and the second terminal are respectively connected to the corresponding one of the plurality of lead wires, the first terminal comprises a first wire bonding portion and a first tab extending out of the socket, and a first stud and a second stud are spaced apart from each other on one side of the first wire bonding portion,
where the one of the plurality of lead wires is located between the first stud and the second stud, and the first stud and/or the second stud are/is configured to be bent toward the plurality of lead wires to limit a position of the plurality of lead wires.

According to some embodiments of the present disclosure, a support portion configured to support the plurality of lead wires is disposed between the first stud and the second stud.

According to some embodiments of the present disclosure, a height by which the first stud protrudes from the first wire bonding portion is greater than a height by which the second stud protrudes from the first wire bonding portion, and a first positioning surface configured to position the plurality of lead wires is on a side of the first stud facing the second stud.

According to some embodiments of the present disclosure, the terminal block has a limiting slot configured to limit the position of the plurality of lead wires. The limiting slot is located on one side of the first wire bonding portion, such that the first stud and the second stud are located on a side of the first wire bonding portion away from the limiting slot.

According to some embodiments of the present disclosure, the terminal block comprises a limiting column. A third stud and a fourth stud are spaced apart from each other on one end of the limiting column. The limiting slot is defined by the third stud and the fourth stud. The third stud has a greater height than the fourth stud, and a second positioning surface configured to position the plurality of lead wires is on a side of the third stud facing the fourth stud.

According to some embodiments of the present disclosure, three mounting positions are arranged at intervals on the terminal block, and the stator assembly further comprises a third terminal, and the first terminal, the second terminal, and the third terminal which are sequentially mounted at the three mounting positions.

According to some embodiments of the present disclosure, the three mounting positions are arranged at intervals in a first direction. The first terminal further comprises a first bent portion and a second bent portion. One end of the first bent portion is connected to a side of the first wire bonding portion close to the second terminal. The other end of the first bent portion is bent toward the second terminal and is connected to one end of the second bent portion. The other end of the second bent portion extends in a second direction perpendicular to the first direction and is connected to the first tab.

The second terminal comprises a second wire bonding portion, a second mounting portion, and a second tab. One end of the second mounting portion is connected to a side of the second wire bonding portion away from the first wire bonding portion, and the other end of the second mounting portion is connected to the second tab.

The third terminal comprises a third wire bonding portion, a third mounting portion, and a third tab. One end of the third mounting portion is connected to a side of the third wire bonding portion close to the second wire bonding portion, and the other end of the third mounting portion is connected to the third tab.

According to some embodiments of the present disclosure, the first terminal further comprises a first mounting portion. Two ends of the first mounting portion are respectively connected to the first wire bonding portion and the first tab. The plurality of mounting positions has a sealing groove, a notch groove, and a mounting groove in sequence in a direction away from the first wire bonding portion. The sealing groove, the notch groove, and the mounting groove are in communication with each other. A width of the sealing groove and a width of the mounting groove are less than a width of the notch groove. The sealing groove is in interference fit with the first mounting portion, and the mounting groove is in interference fit with the first tab.

According to some embodiments of the present disclosure, a sealing protrusion on a side of the socket facing the terminal block is seal-fitted to the sealing groove.

According to some embodiments of the present disclosure, a partial structure of the first tab protrudes outward to form a plurality of bumps arranged at an interval, and the plurality of bumps are in interference fit with a side wall of the mounting groove.

According to some embodiments of the present disclosure, the stator assembly further comprises a protective housing connected to the terminal block and covering the first wire bonding portion and the lead wire.

According to some embodiments of the present disclosure, the terminal block has one of a positioning column and a positioning hole configured to fit with and position the positioning column; the socket has the other of the positioning column and the positioning hole.

An embodiment of the present disclosure provides a motor, which comprises the stator assembly of the above embodiments.

An embodiment of the present disclosure provides a washing appliance, which comprises the motor of the above embodiments.

Other aspects and advantages of the present disclosure will be given in the following description, some of which will become apparent from the following description or may be learned from practices of the present disclosure.

### BRIEF DESCRIPTION OF DRAWINGS

The present disclosure is further described below with reference to the accompanying drawings and embodiments. In the drawings:
FIG. 1 is a schematic structural diagram of a strip-shaped stator assembly according to an embodiment of the present disclosure;
FIG. 2 is a schematic structural diagram of a strip-shaped stator assembly connected end to end according to an embodiment of the present disclosure;
FIG. 3 is a partial schematic structural exploded view of the stator assembly in FIG. 2;
FIG. 4 is a schematic exploded view of a terminal block and a socket according to an embodiment of the present disclosure;
FIG. 5 is a partial schematic structural diagram of a stator assembly with a socket being not shown according to an embodiment of the present disclosure;
FIG. 6 is a schematic structural diagram of a first terminal, a second terminal, and a third terminal according to an embodiment of the present disclosure;
FIG. 7 is a schematic top view of the first terminal, the second terminal, and the third terminal in FIG. 6;
FIG. 8 is a schematic structural diagram of a terminal block according to an embodiment of the present disclosure; and
FIG. 9 is a schematic structural diagram of a socket according to an embodiment of the present disclosure.

### Reference numerals:

stator assembly 1000;
insulation frame 100; winding 110; lead wire 111; terminal block 120; mounting position 121; sealing groove 1211; notch groove 1212; mounting groove 1213; limiting slot 122; third stud 123; second positioning surface 1231; fourth stud 124; limiting column 125; first sealing surface 126; positioning hole 127; socket 130; protective housing 131; encapsulation space 132; sealing protrusion 133; second sealing surface 134; positioning column 135;
first terminal 200; first wire bonding portion 210; first stud 211; first positioning surface 2111; second stud 212; support portion 213; first tab 220; limiting hole 221; bump 222; first mounting portion 230; first bent portion 231; second bent portion 232;
second terminal 300; second wire bonding portion 310; second tab 320; second mounting portion 330;
third terminal 400; third wire bonding portion 410; third tab 420; third mounting portion 430;
stator core 500.

### DETAILED DESCRIPTION

Embodiments of the present disclosure will be exemplarily described in detail hereinafter with reference to accompanying drawings in which the same or like reference characters refer to the same or like elements or elements having the same or like functions throughout. The embodiments described below by reference to the accompanying drawings are exemplary and are intended for explanation only and are not to be construed as limiting the present disclosure.

In the description of the present disclosure, it should be understood that for the description of orientations, the orientation or positional relationships indicated by the terms such as "on", "below", "front", "rear", "left", and "right" are based on orientation or position relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

In the description of the present disclosure, the term "at least one" means one or more, the term "plurality of" (or multiple) means at least two, the term such as "greater than", "less than", "exceed" or variants thereof prior to a number or series of numbers is understood to not comprising the number adjacent to the term. The term "at least" prior to a number or series of numbers is understood to comprise the number adjacent to the term "at least", and all subsequent numbers or integers that could logically be comprised, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

In the description of the present disclosure, unless otherwise explicitly defined, the terms such as "configure," "install/mount" and "connect" should be understood in a broad sense, and those having ordinary skills in the art can reasonably determine the specific meanings of the above terms in the present disclosure based on the specific contents of the technical scheme.

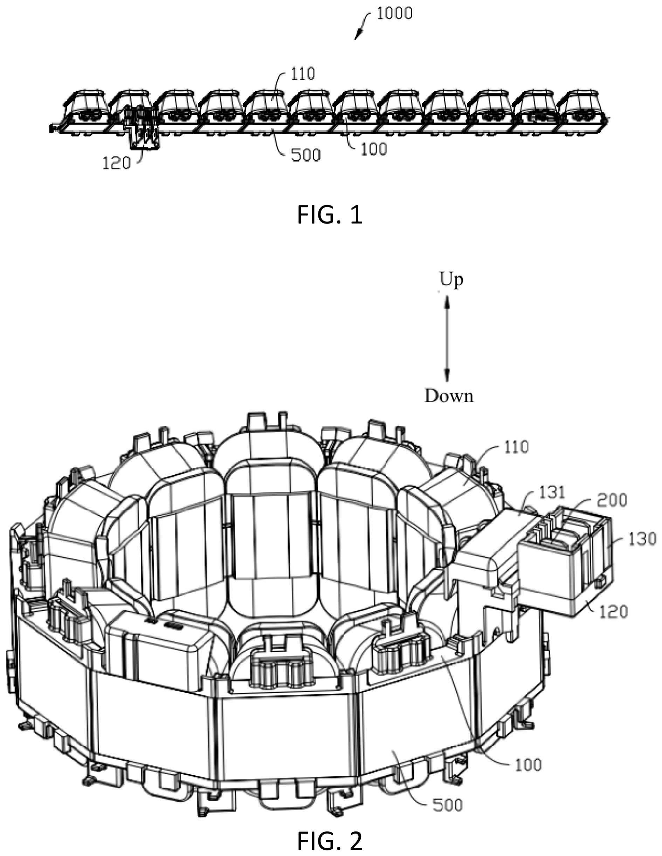

Referring to FIG. 1, a strip-shaped stator assembly 1000 according to one embodiment of the present disclosure is connected end to end to obtain a ring-shaped stator assembly 1000 shown in FIG. 2. The stator assembly 1000 according to the embodiment of the present disclosure can reduce the warping of the lead wire 111 and improve the stability of connection between a lead wire 111 and a terminal. It should be noted that a strip-shaped stator core 500 or a block-assembled stator core 500 may be used depending on actual situations.

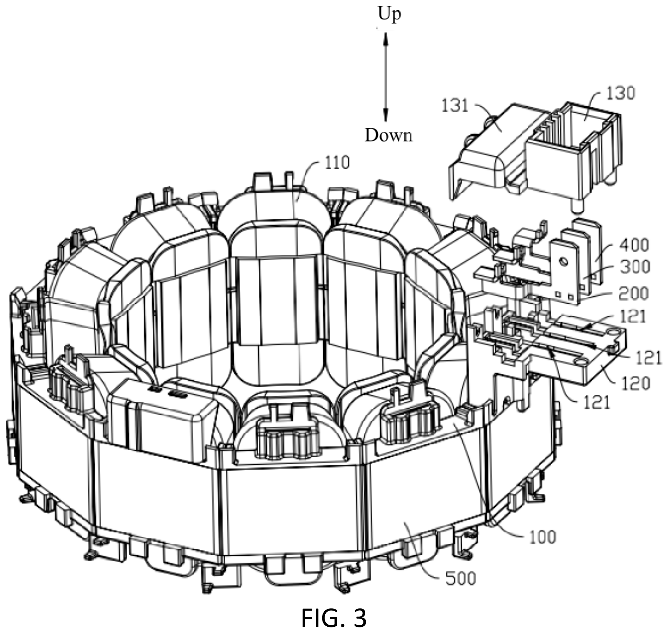

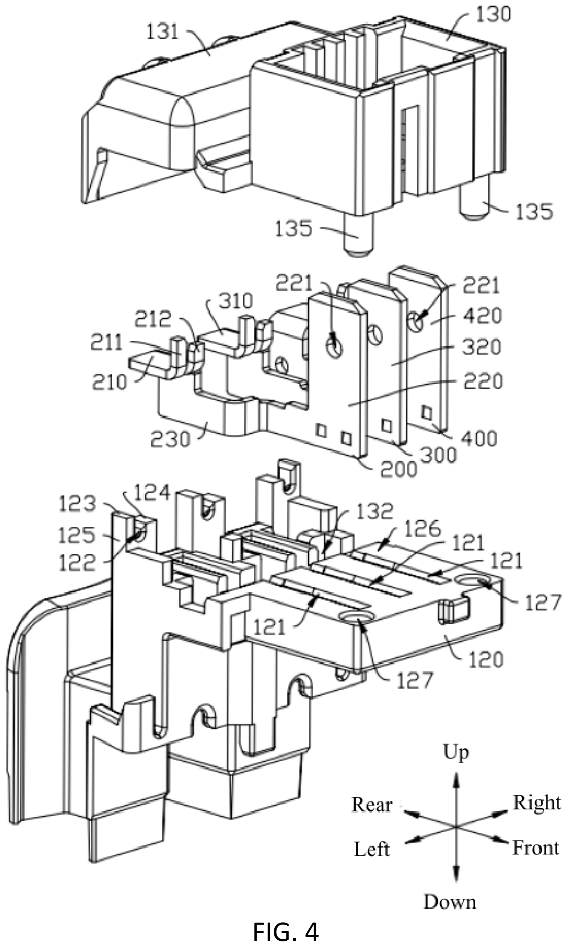

Referring to FIG. 3 and FIG. 4, in an embodiment of the present disclosure, the stator assembly 1000 comprises a stator core 500, an insulation frame 100, a winding 110, a terminal block 120, a socket 130, a first terminal 200, and a second terminal 300. The insulation frame 100 is embedded in the stator core 500. The winding 110 is wound around the insulating frame 100. The terminal block 120 may be connected to the insulating frame 100 by, for example, integral injection molding, or may be connected to the insulating frame 100 or the stator core 500 by buckling, fastening, welding, or other means. A plurality of mounting positions 121 are arranged at intervals on the terminal block 120, such that the first terminal 200 and the second terminal 300 are respectively mounted at the corresponding mounting positions 121. The socket 130 is connected to the terminal block 120 and covers the mounting positions 121. The first terminal 200 and the second terminal 300 are made of a conductive material, and are respectively connected to the lead wire 111 of the winding 110.

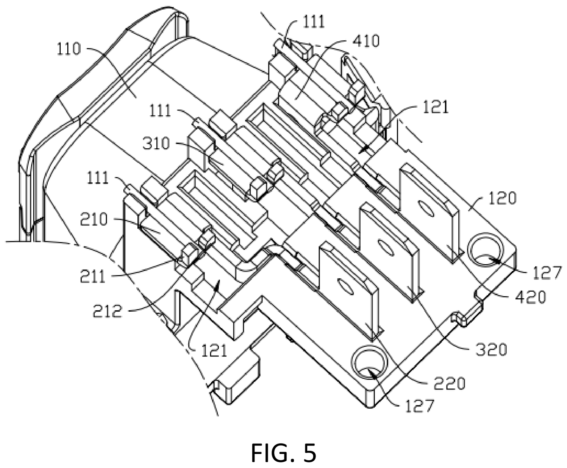

Referring to FIG. 4, the first terminal 200 comprises a first wire bonding portion 210 and a first tab 220. The first wire bonding portion 210 is in the shape of a sheet extending in a horizontal direction, and the first tab 220 is in the shape of a sheet extending in a vertical direction. The first wire bonding portion 210 may be connected to the first tab 220 directly or through a first mounting portion 230. The first tab 220 extends out of the socket 130, and can be directly connected to a power cord without a power adapter cable, to supply power to the winding 110. A first stud 211 and a second stud 212 are arranged spaced apart from each other on one side of the first wire bonding portion 210. Referring to FIG. 5, a lead wire 111 is arranged between the first stud 211 and the second stud 212, and the first stud 211 and/or the second stud 212 are/is configured to be bent toward the lead wire 111 to abut and fit with the lead wire 111 to limit the position of the lead wire 111. It should be noted that the second terminal 300 comprises a second wire bonding portion 310 and a second tab 320, and a first stud 211 and a second stud 212 which are the same as those of the first terminal 200 may be arranged on one side of the second wire bonding portion 310. The shape, structure, and function of the second terminal 300 are similar to those of the first terminal 200, so the details will not be repeated herein.

For example, the winding 110 is made of an aluminum enameled wire with a diameter ≥ 0.4 mm. The lead wire 111 of the enameled wire is guided to the first wire bonding portion 210 by a winding probe and positioned between the first stud 211 and the second stud 212. A tooling is configured to clamp the first stud 211 and the second stud 212 and cause them to bend and deform toward the lead wire 111 to limit the position of the lead wire 111 and prevent warping of the lead wire 111, thereby reducing the position deviation or dislocation of the lead wire 111. Then, the excess enameled wire is cut off, and the enamel of the lead wire 111 at the first wire bonding portion 210 is vaporized by laser. The lead wire 111 without the enamel is soldered to the first wire bonding portion 210 with a robotic arm. It can be understood that since the first stud 211 and the second stud 212 are arranged on the first wire bonding portion 210, the solder can adhere to the first stud 211 and the second stud 212. Therefore, the stability of soldering between the solder and the first wire bonding portion 210 is improved, and the peeling of the solder is reduced.

It can be understood that in the above scheme, the first stud 211 and/or the second stud 212 are/is bent toward the lead wire 111 by the tooling to further fix and clamp the lead wire 111, such that the warping of the lead wire 111 is effectively reduced, thereby facilitating the subsequent connection of the lead wire 111 and the first wire bonding portion 210. Therefore, as compared with a simple engagement method, manufacturing tolerances undergo less effect by bending and deforming the first stud 211 and/or the second stud 212 to fix the lead wire 111, such that the stability and production efficiency of the connection between the lead wire 111 and the first wire bonding portion 210 can be improved.

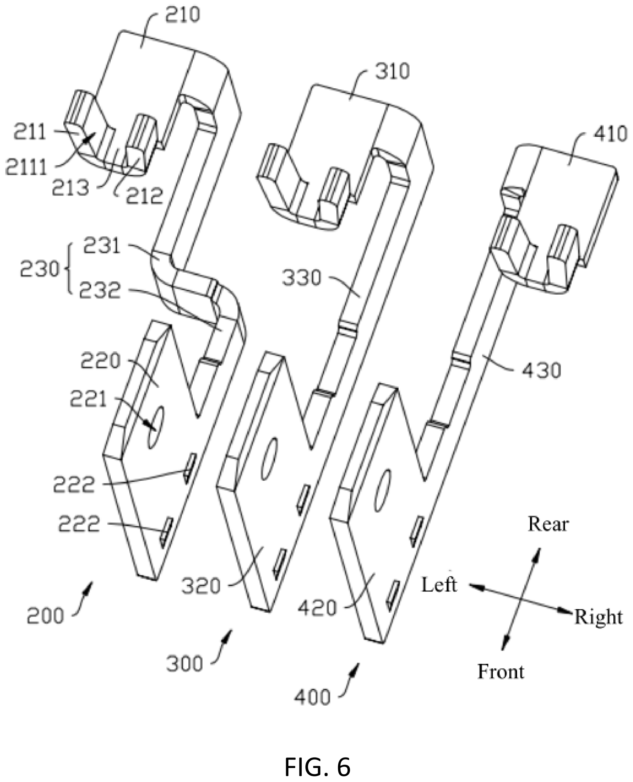

Referring to FIG. 6, in an embodiment of the present disclosure, a support portion 213 is arranged between the first stud 211 and the second stud 212. For example, the support portion 213 and the first wire bonding portion 210 are integrally formed. The support portion 213 is configured to support the lead wire 111. When the first stud 211 and the second stud 212 are bent to limit the position of the lead wire 111, the lead wire 111 is likely to sag without the support portion 213. Therefore, the support portion 213 is configured to support the lead wire 111, and the lead wire 111 can be further fixed by the cooperation of the first stud 211 and the second stud 212, thereby improving the stability of welding between the lead wire 111 and the first wire bonding portion 210.

When the stator assembly 1000 is required to have a small size and a compact structure, i.e., a distance between the first stud 211 and the second stud 212 needs to be small, it is difficult to precisely arrange the lead wire 111 between the first stud 211 and the second stud 212 due to appliance precision. A structure such as a sensor for positioning will lead to high costs and a complicated structure. Therefore, referring to FIG. 4 and FIG. 6, in an embodiment of the present disclosure, a height by which the first stud 211 protrudes from the first wire bonding portion 210 is greater than a height by which the second stud 212 protrudes from the first wire bonding portion 210, and a first positioning surface 2111 configured to position the lead wire 111 is on a side of the first stud 211 facing the second stud 212. To arrange the lead wire 111, since the height of the first stud 211 is greater than that of the second stud 212, the lead wire 111 may first be fitted with and thus positioned by the first positioning surface 2111 of the first stud 211, and then the lead wire 111 may be moved downward to between the first stud 211 and the second stud 212. Such a design has a simple structure and can achieve high precision, high efficiency, and low costs.

Referring to FIG. 4 and FIG. 5, in an embodiment of the present disclosure, the terminal block 120 has a limiting slot 122 which is located on one side of the first wire bonding portion 210 and close to the winding 110. The first stud 211 and the second stud 212 are arranged on the other side of the first wire bonding portion 210, i.e., at a position away from the winding 110. Therefore, the lead wire 111 can first be engaged in the limiting slot 122, then pass through the first wire bonding portion 210, and finally pass between the first stud 211 and the second stud 212. The above configuration ensures that the lead wire 111 is in contact with the first wire bonding portion 210, thereby improving the stability and yield of soldering.

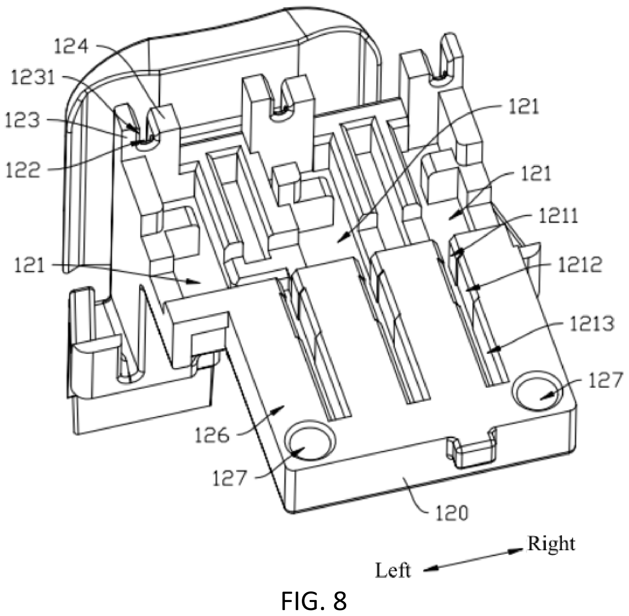

Referring to FIG. 8, in an embodiment of the present disclosure, the terminal block 120 comprises a limiting column 125 located on a side of the first wire bonding portion 210 close to the winding 110. A third stud 123 and a fourth stud 124 are arranged spaced apart from each other on an upper end of the limiting column 125 to define the limiting slot 122. With respect to a same reference plane, the third stud 123 has a greater height than the fourth stud 124, and a second positioning surface 1231 is provided on a side of the third stud 123 facing the fourth stud 124. Therefore, during the arrangement of the lead wire 111, before the lead wire 111 is engaged in the limiting slot 122, the lead wire 111 may be fitted with and thus positioned by the second positioning surface 1231, and then the lead wire 111 may be moved downward to accurately engage the lead wire 111 in the limiting slot 122, such that the engagement efficiency can be improved. It should be noted that a scheme where the second positioning surface 1231 is on the third stud 123 may be cooperated with a scheme where the first positioning surface 2111 is on the first stud 211, and a position of the third stud 123 corresponds to that of the first stud 211, i.e., the first stud 211 is located on the left side, the second stud 212 is located on the right side, the third stud 123 is located on the left side, and the fourth stud 124 is located on the right side, such that the lead wire 111 can be smoothly engaged in the limiting slot 122, and can smoothly pass between the first stud 211 and the second stud 212.

Referring to FIG. 3 and FIG. 4, in an embodiment of the present disclosure, three mounting positions 121 are arranged at intervals on the terminal block 120 in a first direction which may be a left-right direction in FIG. 4. The stator assembly 1000 further comprises a third terminal 400, and the second terminal 300 and the third terminal 400 respectively comprise the second tab 320 and a third tab 420. The first terminal 200, the second terminal 300, and the third terminal 400 are sequentially mounted at the three mounting positions 121 in the left-right direction, and the first terminal 200, the second terminal 300, and the third terminal 400 are arranged at intervals to avoid short circuit due to contact. It should be noted that the winding 110 comprises a plurality of lead wires 111, and the number of lead wires 111 corresponds to the number of terminals. For example, the stator assembly 1000 comprises the first terminal 200, the second terminal 300, and the third terminal 400, and three lead wires 111 are respectively connected to the first terminal 200, the second terminal 300, and the third terminal 400. It should also be noted that in another embodiment of the present disclosure, the stator assembly 1000 comprises only the first terminal 200 and the second terminal 300, i.e., comprises only two terminals, in which case the number of mounting positions 121 may be two, and the first terminal 200 and the second terminal 300 are spaced apart from each other and are respectively mounted at the two mounting positions 121.

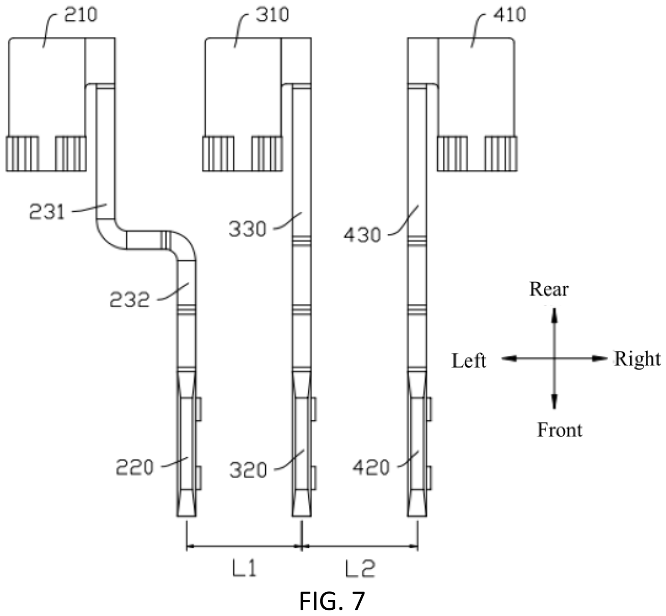

It can be understood that since the first tab 220, the second tab 320, and the third tab 420 have to be snap-fitted to a power cord, spacings between the first tab 220, the second tab 320, and the third tab 420 have to meet a requirement in order to adapt to the structure of a power cord plug. For example, referring to FIG. 7, a spacing between a middle portion of the first tab 220 and a middle portion of the second tab 320 is defined as L1 which satisfies 4 mm ≤ L1 ≤ 6 mm, for example, L1 is 5 mm. A spacing between the middle portion of the second tab 320 and a middle portion of the third tab 420 is defined as L2 which satisfies 4 mm ≤ L2 ≤ 6 mm, for example, L2 is 5 mm. Therefore, the spacings between the first tab 220, the second tab 320, and the third tab 420 are small, and the solder at adjacent soldering positions is likely to stick to each other during soldering of the lead wire 111 to the first terminal 200, the second terminal 300, and the third terminal 400, resulting in a short circuit.

To solve the problem that the solder at adjacent soldering positions is likely to stick to each other, referring to FIG. 6, in an embodiment of the present disclosure, the first terminal 200 further comprises a first mounting portion 230 comprising a first bent portion 231 and a second bent portion 232 which are both in the shape of an elongated sheet. One end of the first bent portion 231 is connected to a side of the first wire bonding portion 210 close to the second terminal 300. The other end of the first bent portion 231 is bent toward the second terminal 300 and is connected to one end of the second bent portion 232. The other end of the second bent portion 232 extends in a second direction and is connected to the first tab 220. The second direction may be a front-rear direction in FIG. 6, i.e., the second direction is perpendicular to the first direction. The first wire bonding portion 210, the first bent portion 231, the second bent portion 232, and the first tab 220 may be integrally formed.

Still referring to FIG. 6, the second terminal 300 further comprises a second wire bonding portion 310 and a second mounting portion 330. The second wire bonding portion 310 is in the shape of a sheet extending in the horizontal direction. The second tab 320 is in the shape of a sheet extending in the vertical direction. The second mounting portion 330 is in the shape of an elongated sheet. One end of the second mounting portion 330 is connected to a side of the second wire bonding portion 310 away from the first terminal 200. The other end of the second mounting portion 330 is connected to the second tab 320.

Still referring to FIG. 6, the third terminal 400 further comprises a third wire bonding portion 410 and a third mounting portion 430. The third wire bonding portion 410 is in the shape of a sheet extending in the horizontal direction. The third tab 420 is in the shape of a sheet extending in the vertical direction. The third mounting portion 430 is in the shape of an elongated sheet. One end of the third mounting portion 430 is connected to a side of the third wire bonding portion 410 close to the second terminal 300. The other end of the third mounting portion 430 is connected to the third tab 420. The third wire bonding portion 410 may also have a structure similar to the first stud 211, the second stud 212, and the support portion 213 of the first terminal 200. Therefore, the third wire bonding portion 410 can be soldered to the lead wire 111. The structure and the function of the third wire bonding portion 410 are similar to those of the first terminal 200, so the details will not be repeated herein.

According to the above structural layout of the first terminal 200, the second terminal 300, and the third terminal 400, the spacings between the first tab 220, the second tab 320, and the third tab 420 are suitable for the structure of the power cord, and the first wire bonding portion 210, the second wire bonding portion 310, and the third wire bonding portion 410 are spaced apart from each other. This effectively prevents the solder at adjacent soldering positions from sticking to each other during soldering to cause a short circuit, thereby improving the safety and reliability of the stator assembly 1000.

Still referring to FIG. 6, in an embodiment of the present disclosure, the first tab 220, the second tab 320, and the third tab 420 have a limiting hole 221 which is circular, respectively. Therefore, when the first tab 220, the second tab 320, and the third tab 420 are connected to a power cord plug, the first tab 220, the second tab 320, and the third tab 420 can be engaged with a protruding structure of the plug for locking, thereby improving the stability of connection between the plug and the socket 130. It should be noted that in another embodiment of the present disclosure, the limiting holes 221 may also be replaced with structures such as recesses depending on actual situations.

Referring to FIG. 8, in an embodiment of the present disclosure, each of the mounting positions 121 has a sealing groove 1211, a notch groove 1212, and a mounting groove 1213 in sequence in a direction away from the first wire bonding portion 210, and the sealing groove 1211, the notch groove 1212, and the mounting groove 1213 are in communication with each other. In the left-right direction, a width of the sealing groove 1211 is less than a width of the notch groove 1212, and a width of the mounting groove 1213 is also less than the width of the notch groove 1212. During mounting of the first terminal 200, the first mounting portion 230 of the first terminal 200 is in interference fit with the sealing groove 1211 to prevent an encapsulation material from entering the mounting groove 1213 during injection molding of the encapsulation material, thereby preventing the encapsulation material from seeping out of the socket 130 along the first tab 220. The first tab 220 is in interference fit with the mounting groove 1213 to limit the position of the first terminal 200. It can be understood that since an overall length of the sealing groove 1211, the notch groove 1212, and the mounting groove 1213 is relatively long, the interference fit of the first terminal 200 with the sealing groove 1211 and the mounting groove 1213 leads to a high mounting difficulty. Therefore, the notch groove 1212 reduces the contact area between the first mounting portion 230 and the mounting position 121, thereby reducing the mounting difficulty and improving the production efficiency.

Referring to FIG. 6, in an embodiment of the present disclosure, a partial structure of the first tab 220 protrudes outward to form a plurality of bumps 222 spaced apart from each other. For example, as shown in FIG. 6, two bumps 222 are spaced apart from each other in the front-rear direction. The bump 222 is formed by cutting the partial structure of the first tab 220 and causing the cut part to protrude outward, so one side of the first tab 220 is recessed and the other side protrudes. When the first tab 220 is being inserted in the mounting groove 1213, the bump 222 can rebound, such that the first tab 220 can be smoothly arranged in the mounting groove 1213. It can be understood that two bumps can prevent the rotation of the first tab 220 about one of the bumps 222, thereby reducing the occurrence of dislocation, displacement, and the like of the first tab 220.

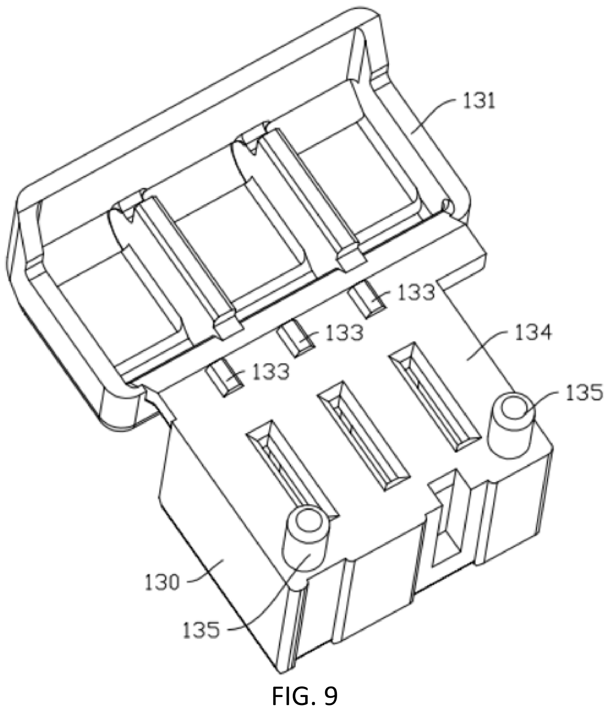

Referring to FIG. 8 and FIG. 9, in an embodiment of the present disclosure, a first sealing surface 126 is on a side of the terminal block 120 facing the socket 130, a second sealing surface 134 is on a side of the socket 130 facing the terminal block 120. a sealing protrusion 133 is on the second sealing surface 134. The stator assembly 1000 further comprises a protective housing 131 connected to the terminal block 120. The protective housing 131 covers the first wire bonding portion 210, the second wire bonding portion 310, the third wire bonding portion 410, and the lead wire 111. An encapsulation space 132 is formed between the protective housing 131 and the terminal block 120. The protective housing 131 may also be connected to the socket 130 by, for example, integral injection molding, such that the assembly process can be simplified. After three lead wires 111 are respectively soldered to the first wire bonding portion 210, the second wire bonding portion 310, and the third wire bonding portion 410, the terminal block 120 is connected to the socket 130. The first sealing surface 126 is seal-fitted to the second sealing surface 134, and the sealing protrusions 133 are seal-fitted to the sealing grooves 1211. Then, encapsulation can be performed.

It can be understood that assuming that there is no protective housing 131, the encapsulation material such as a BMC material directly impacts the first wire bonding portion 210, the second wire bonding portion 310, the third wire bonding portion 410, and the lead wire 111 during encapsulation, which may cause the lead wire 111 to be loosened and so on. Therefore, the arrangement of the protective housing 131 can protect the lead wire 111, effectively prevent the encapsulation material from directly impacting the lead wire 111 during the encapsulation stage, and thereby improve the stability of connection between the lead wire 111 and the corresponding first wire bonding portion 210, second wire bonding portion 310, and third wire bonding portion 410. Then, the encapsulation material can also slowly flow into the encapsulation space 132 through a gap between the protective housing 131 and the terminal block 120 to further improve the stability of connection between the lead wire 111 and the corresponding first wire bonding portion 210, second wire bonding portion 310, and third wire bonding portion 410, and reduce the noise and temperature rise of the stator assembly 1000.

Still referring to FIG. 8 and FIG. 9, in an embodiment of the present disclosure, two positioning holes 127 are spaced apart from each other on a side of a front end of the terminal block 120 facing the socket 130, and two positioning columns 135 are spaced apart from each other on a side of a front end of the socket 130 facing the terminal block 120. The positions of the two positioning columns 135 correspond to the positions of the two positioning holes 127, such that the positioning columns 135 can be fitted with and thus positioned by the positioning holes 127. As such, the position of the socket 130 relative to the terminal block 120 can be determined quickly, thereby improving the assembly efficiency. It should be noted that in another embodiment of the present disclosure, two positioning columns 135 are on the front end of the terminal block 120, and two positioning holes 127 are on the front end of the socket 130, such that the positioning columns 135 are fitted with and thus positioned by the positioning holes 127. It should also be noted that in another embodiment of the present disclosure, the number of the positioning holes 127 and the number of the positioning columns 135 may also be one, three, four, etc., depending on actual situations.

In an embodiment of the present disclosure, the first terminal 200, the second terminal 300, the third terminal 400, the terminal block 120, and the socket 130 may be integrally formed, i.e., the first terminal 200, the second terminal 300, the third terminal 400, the terminal block 120, and the socket 130 are injection molded together in the injection molding stage to simplify the assembly process and improve the assembly efficiency. In another embodiment of the present disclosure, for example, as shown in FIG. 4, the first terminal 200, the second terminal 300, the third terminal 400, and the socket 130 are independent of each other, and they are assembled together in a subsequent assembly stage. According this scheme, in the manufacturing stage, if the socket 130, the terminal block 120, and so on are not injection molded properly, they can be directly put back into the furnace to be melted again, which is conducive to recycling and reduces production costs.

An embodiment of the present disclosure provides a motor, which comprises the stator assembly 1000 of the above embodiments. The motor may be a wash motor, a single-phase asynchronous motor, etc. In the motor of the embodiment of the present disclosure, the stator assembly 1000 of the above embodiments is adopted. The first terminal 200 of the stator assembly 1000 is mounted at a mounting position 121 of the terminal block 120. The winding 110 is wound around the insulating frame 100. The lead wire 111 of the winding 110 can be connected to the first wire bonding portion 210 of the first terminal 200 by, for example, soldering, such that the stability of connection between the lead wire 111 and the first wire bonding portion 210 can be improved. The first tab 220 of the first terminal 200 extends out of the socket 130, such that the first tab 220 can be conveniently connected to a power cord to supply power to the winding 110. The first stud 211 and the second stud 212 are spaced apart from each other on one end of the first wire bonding portion 210, such that the lead wire 111 can pass between the first stud 211 and the second stud 212. The first stud 211 and/or the second stud 212 are/is bent toward the lead wire 111 by the tooling to further fix and clamp the lead wire 111, such that the warping of the lead wire 111 is effectively reduced, thereby facilitating the subsequent connection of the lead wire 111 and the first wire bonding portion 210. Therefore, as compared with an engagement method, manufacturing tolerances undergo less effect by bending and deforming the first stud 211 and/or the second stud 212, such that the stability and production efficiency of the connection between the lead wire 111 and the first wire bonding portion 210 can be improved.

Because the motor adopts all the technical schemes of the stator assembly 1000 of the above embodiments, the motor has at least all the beneficial effects achieved by the technical schemes of the above embodiments, and the details will not be repeated here.

An embodiment of the present disclosure provides a washing appliance, which comprises the motor of the above embodiments. The washing appliance may be a drum washing machine, a drum dryer, a pulsator washing machine, etc. In the washing appliance according to the embodiment of the present disclosure, the motor of the above embodiment is adopted. The first stud 211 and/or the second stud 212 are/is bent toward the lead wire 111 by the tooling to further fix and clamp the lead wire 111, such that the warping of the lead wire 111 is effectively reduced, thereby facilitating the subsequent connection of the lead wire 111 and the first wire bonding portion 210. Therefore, as compared with an engagement method, manufacturing tolerances undergo less effect by bending and deforming the lead wire 111 using the first stud 211 and/or the second stud 212, such that the stability and production efficiency of the connection between the lead wire 111 and the first wire bonding portion 210 can be improved.

Because the washing appliance adopts all the technical schemes of the motor of the above embodiments, the washing appliance has at least all the beneficial effects achieved by the technical schemes of the above embodiments, and the details will not be repeated here.

The embodiments of the present disclosure have been described in detail above with reference to the accompanying drawings, but the present disclosure is not limited to the above embodiments, and various changes may be made within the knowledge of those having ordinary skills in the art without departing from the protection scope of the present disclosure.

## Claims

1. A stator assembly, comprising:
an insulating frame;
a winding, wound around the insulating frame and comprising a plurality of lead wires;
a terminal block, wherein a plurality of mounting positions are arranged at an interval on the terminal block;
a socket, connected to the terminal block and covering the plurality of mounting positions; and
a first terminal and a second terminal, respectively mounted at a corresponding one of the plurality of mounting positions, wherein the first terminal and the second terminal are respectively connected to the corresponding one of the plurality of lead wires, the first terminal comprises a first wire bonding portion and a first tab extending out of the socket, and a first stud and a second stud are spaced apart from each other on a side of the first wire bonding portion,
wherein the one of the plurality of lead wires is located between the first stud and the second stud, and the first stud and/or the second stud are/is configured to be bent toward the one of the plurality of lead wires to limit a position of the one of the plurality of lead wires.

2. The stator assembly of claim 1, wherein a support portion configured to support the plurality of lead wires is disposed between the first stud and the second stud.

3. The stator assembly of claim 1 or 2, wherein a height by which the first stud protrudes from the first wire bonding portion is greater than a height by which the second stud protrudes from the first wire bonding portion, and a first positioning surface configured to position the plurality of lead wires is on a side of the first stud facing the second stud.

4. The stator assembly of any one of claims 1 to 3, wherein the terminal block has a limiting slot configured to limit the position of the plurality of lead wires, and the limiting slot is located on a side of the first wire bonding portion, wherein the first stud and the second stud are located on a side of the first wire bonding portion away from the limiting slot.

5. The stator assembly of claim 4, wherein the terminal block comprises a limiting column, a third stud and a fourth stud are spaced apart from each other on an end of the limiting column, the limiting slot is formed between the third stud and the fourth stud, the third stud has a greater height than the fourth stud, and a second positioning surface configured to position the plurality of lead wires is on a side of the third stud facing the fourth stud.

6. The stator assembly of any one of claims 1 to 5, wherein three mounting positions are arranged at an interval on the terminal block, the stator assembly further comprises a third terminal, and the first terminal, the second terminal, and the third terminal are sequentially mounted at the three mounting positions.

7. The stator assembly of claim 6, wherein the three mounting positions are arranged at an interval in a first direction, the first terminal further comprises a first bent portion and a second bent portion, an end of the first bent portion is connected to a side of the first wire bonding portion close to the second terminal, an other end of the first bent portion is bent toward the second terminal and is connected to an end of the second bent portion, and an other end of the second bent portion extends in a second direction perpendicular to the first direction and is connected to the first tab;
the second terminal comprises a second wire bonding portion, a second mounting portion, and a second tab, an end of the second mounting portion is connected to a side of the second wire bonding portion away from the first wire bonding portion, and an other end of the second mounting portion is connected to the second tab; and
the third terminal comprises a third wire bonding portion, a third mounting portion, and a third tab, an end of the third mounting portion is connected to a side of the third wire bonding portion close to the second wire bonding portion, and an other end of the third mounting portion is connected to the third tab.

8. The stator assembly of any one of claims 1 to 7, wherein the first terminal further comprises a first mounting portion, two ends of the first mounting portion are respectively connected to the first wire bonding portion and the first tab, the plurality of mounting positions has a sealing groove, a notch groove, and a mounting groove in sequence in a direction away from the first wire bonding portion, the sealing groove, the notch groove, and the mounting groove are in communication with each other, a width of the sealing groove and a width of the mounting groove are less than a width of the notch groove, the sealing groove is in interference fit with the first mounting portion, and the mounting groove is in interference fit with the first tab.

9. The stator assembly of claim 8, wherein a sealing protrusion on a side of the socket facing the terminal block is seal-fitted to the sealing groove.

10. The stator assembly of claim 8 or 9, wherein a portion of the first tab protrudes outward to form a plurality of bumps arranged at an interval, and the plurality of bumps are in interference fit with a side wall of the mounting groove.

11. The stator assembly of any one of claims 1 to 10, further comprising a protective housing connected to the terminal block and covering the first wire bonding portion and the plurality of lead wires.

12. The stator assembly of any one of claims 1 to 11, wherein the terminal block has one of a positioning column and a positioning hole configured to fit with and position the positioning column, and the socket has an other of the positioning column and the positioning hole.

13. A motor, comprising a stator assembly of any one of claims 1 to 12.

14. A washing appliance, comprising a motor of claim 13.
